Europäisches Patentamt

European Patent Office

Office européen des brevets

(11) Veröffentlichungsnummer : **0 151 978**
**B1**

(12)

# EUROPÄISCHE PATENTSCHRIFT

(45) Veröffentlichungstag der Patentschrift :
27.07.88

(21) Anmeldenummer : 85100697.3

(22) Anmeldetag : 24.01.85

(51) Int. Cl.⁴ : **B 65 D 35/08**, B 65 D 65/40, B 32 B 15/08

(54) Kunststoff-Aluminium-Laminattube.

(30) Priorität : 13.02.84 DE 3405045

(43) Veröffentlichungstag der Anmeldung :
21.08.85 Patentblatt 85/34

(45) Bekanntmachung des Hinweises auf die Patenterteilung : 27.07.88 Patentblatt 88/30

(84) Benannte Vertragsstaaten :
AT BE CH DE FR GB IT LI NL

(56) Entgegenhaltungen :
FR-A- 2 167 853

(73) Patentinhaber : Mepag, Metall und Plastik Packung GmbH & Co.
Rheinallee 128
D-6500 Mainz (DE)

(72) Erfinder : Menzel, Hans
Dompfaffenweg 7a
D-8192 Geretsried (DE)

## Beschreibung

Die vorliegende Erfindung betrifft eine Kunststoff-Aluminium-Laminattube mit verbesserten Eigenschaften.

Kunststoff-Aluminium-Laminattuben stellen seit einigen Jahren eine Alternative zur Anwendung von den bislang im Vordergrund stehenden Aluminiumtuben dar. Ihnen wird insbesondere dann der Vorzug vor Aluminiumtuben gegeben, wenn es sich entweder um Füllgüter handelt, die selbst in innenlackierten Aluminiumtuben nicht verpackt werden können, oder andererseits aus bestimmten Gründen auf ein differenziertes Erscheinungsbild der Tube und eine gewisse Rückstellkraft Wert gelegt wird.

Als Ausgangsmaterial zur Herstellung dieser Tuben wird dabei ein aus mindestens drei Schichten bestehendes Laminat verwendet, wobei in der primitivsten Form eine Aluminiumfolie mit einer Schichtdicke zwischen etwa 20 µm und etwa 150 µm auf beiden Seiten mit einer Kunststoff-Folie, die vorzugsweise aus Polyethylen besteht, und eine bevorzugte Schichtdicke zwischen etwa 50 µm und etwa 250 µm aufweist, abgedeckt ist.

In der Regel werden, um den Verbund zwischen der Kunststoff- und der Aluminiumschicht zu erhöhen, haftende Zwischenschichten eingebaut, die beispielsweise aus gegebenenfalls vernetzten Ethylen-Acrylsäure-Copolymerisaten, wie Ionomeren vom Typ « Surlyn A$^R$ », bestehen, vgl. z. B. die DE - PS 1 486 175. Dabei ist die Einbringung weiterer Schichten möglich, die aus Kunststoff, Papier etc., bestehen können, so daß weitgehende Variationsmöglichkeiten zur Herstellung von Laminaten mit besonderen Eigenschaften gegeben sind.

Die zur Bildung der Tubenoberfläche bestimmte Schicht des Laminats ist in der Regel durch Vielfarbendruck dekoriert. Da die Fertigung des Tubenkörpers durch überlappendes übereinanderlegen der Folienränder und anschließende Verschweißung erfolgt, wie es beispielsweise in der DE-PS 1 486 190 beschrieben ist, galt es bisher als erforderlich, zur ungestörten Durchführung des Verschweißvorgangs und Erzielung einer absolut dichten Naht, den Bereich der späteren Schweißnaht bereits auf der bedruckten Laminatfolie von Druckfarben und Lackierung freizuhalten, so daß druckfreie Mindestabstände vom Folienrand von Folienherstellern routinemäßig vorgeschrieben sind.

Dies führt jedoch dazu, daß das Gesamtdruckbild des zylindrischen Tubenkörpers im Bereich der Schweißnaht unterbrochen ist und diese Schweißnaht besonders in die Augen fällt, was den ästhetischen Gesamteindruck der Tube sehr störend beeinflußt.

Es wurde nun gefunden, daß man diesen Nachteil beheben und ein einheitliches Druckbild des gesamten Tubenkörpers ohne eine störende Ausnehmung an der Tubenlängsnaht dann herstellen kann, wenn sich die auf der äußeren Laminatschicht befindliche Bedruckung über die gesamte Oberfläche ohne Freilassung eines unbedruckten Randes erstreckt und mit einer zusätzlichen Kunststoffschicht versehen wird, wobei die Folienenden zur Bildung des Tubenkörpers überlappt und anschließend in an sich bekannter Weise verschweißt werden.

Gegenstand der vorliegenden Erfindung ist also eine Kunststoff-Aluminium-Laminattube, deren äußerer Tubenmantel eine Dekoration bzw. Bedruckung aufweist, die mit einer transparenten Kunststoffschicht überzogen ist, dadruch gekennzeichnet, daß sich die Bedruckung über die gesamte Oberfläche bis in den durch Überlappung der Folienenden gebildeten Nahtbereich der Tube erstreckt.

Die FR-A 2 167 852 beschreibt die Herstellung von bekannten Kunststoff-Aluminium-Laminattuben, wobei das Laminat durch einmaliges Rollen in einer solchen Weise, daß seine Längsränder sich berühren, unter Bildung einer Längsnaht oder eines Längsfalzes im Bereich dieser Ränder zu einer Tubenhülse geformt wurde.

Durch diese Verfahrensweise soll es ermöglicht werden, Tuben zu erhalten, deren Beharrungsvermögen im aufgewickelten Zustand und deren Festigkeitseigenschaften im wesentlichen unabhängig voneinander verändert werden können, und außerdem die Menge an Matallfolie zu verringern.

Damit unterscheidet sich diese Veröffentlichung schon in der Aufgabenstellung von dem Gegenstand der vorliegenden Erfindung.

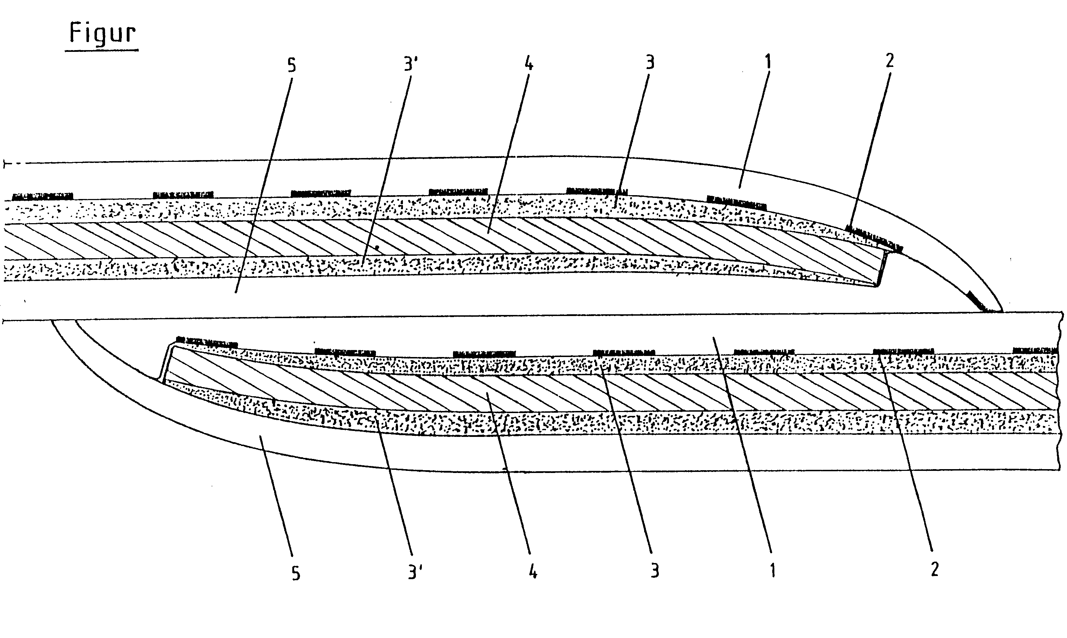

Wie Figur 2 der FR-A deutlich zeigt, wird auch bei dieser Tube in an sich bekannter Weise der Tubenkörper durch Überlappen der Folienränder und anschließendes Verschweißen hergestellt.

Es ist daher davon auszugehen, daß, gemäß der bis zum Zeitpunkt der Erfindung üblichen Praxis, die Schweißnaht von der Bedruckung freiblieb.

Für die erfindungsgemäße Ausgestaltung der Laminattube bieten sich mehrere Möglichkeiten an:

Zum einen kann die zur Außendekoration bestimmte Druckschicht des Laminats mit einer weiteren transparenten Kunststoffschicht versehen werden, wobei es in der Regel ausreicht, diese Schicht in Form einer transparenten Lackschicht, beispielsweise durch Überlackieren der dekorierten Laminatfolie, aufzubringen.

Der Durchmesser der transparenten Kunststoffschicht liegt dabei vorzugsweise zwischen etwa 15 µm und 150 µm vorzugsweise maximal etwa 50 µm.

Eine weitere Möglichkeit besteht darin, eine Kunststoff-Folie auf einer Seite mit einem sog. « Konterdruck » zu versehen und diese dann, mit der bedruckten Seite dem Laminat zugewandt, auf dieses aufzubringen.

Aufgrund der erfindungsgemäßen Zusammensetzung des dekorierten Laminats ist es ohne weiteres möglich, durch Überlappen der Folienenden und anschließendes Verschweißen ein einheitliches gesamtes Druckbild des Tubenkörpers zu erzielen.

Da nicht ausgeschlossen werden kann, daß aufgedruckte Farbstoffe bzw. Pigmente beim durch das Verschweißen der Folienenden auftretenden Erweichen der Kunststoffe auch in das Tubeninnere gelangen können, ist es zweckmäßig, für die Herstellung der Druckfarben nur zum Einsatz in Lebensmitteln bzw. Kosmetika zugelassene Farbstoffe und Pigmente zu verwenden.

Erscheint dies nicht möglich oder ist es erwünscht, die Tubeninnenfläche von solchen Bestandteilen völlig freizuhalten, erscheint es möglich und zweckmäßig, die mit einer Bedruckung versehene Kunststoff-Folie, zumindest im Bereich der Überlappung der Folienenden, mit einer weiteren transparenten Kunststoffschicht zu überziehen, wie es beispielsweise aus der DE -OS 2 930 783 an sich bereits bekannt ist. Die Breite diese Abdeckung ist nicht kritisch; sie kann zwischen etwa 5° und etwa 100°, insbesondere zwischen etwa 10° und 30° der gesamten Innenfläche der Laminattube liegen. Ihre Dicke liegt vorzugsweise zwischen etwa 10 μm und 200 μm, insbesondere etwa 20 μm bis 100 μm.

Die erfindungsgemäß zusammengesetzten zylindrischen Tubenkörper aus dekoriertem Kunststoff-Aluminium-Laminat werden durch Aufspritzen oder Anschweißen des Kopf- und Schulterteils in an sich bekannter Weise fertiggestellt.

Um Wiederholungen des Standes der Technik zu vermeiden, wird hierbei auf eine Übersicht über Art und Herstellung von Aluminium-Kunststoff-Laminattuben Bezug genommen, die in einem Artikel von Menzel, Verpackungs-Rundschau 5/1987, S. 693-694, 698-699, erschienen ist.

In der Figur wird eine schematische Darstellung einer erfindungsgemäß zusammengesetzten Laminattube gegeben, wie sie sich an der Schweißnaht bei Überlappung beider Folienränder darbietet.

Dabei ist die transparente Kunststoffschicht auf de Außenoberfläche des Tubenmantels eine an ihrer Innenseite mit « Konterdruck » dekorierte, transparente, aus Polyolefinen bestehende Kunststoff-Folie (1).

Die dabei enthaltenen Farbpigmente sind als Einbettung (2) zu sehen. Daran schließt sich eine als Haftvermittler dienende Schicht (3) aus einem gegebenenfalls ionomeren Ethylen-Acrylsäure-Copolymerisat, beispielsweise vom Typ « Surlyn A$^R$ », an, die wiederum mit einer Aluminiumfolie (4) verbunden ist.

Diese ist wiederum mit einer weiteren Haftvermittler-Schicht (3') verbunden ; der Folienverbund wird schließlich durch eine Polyethylenschicht (5) abgeschlossen.

Bei der Verschweißung der Längsnaht wird, wie in der DE - PS 1 486 190 beschrieben, in der Regel die Stärke der Überlappungsnaht gegenüber der doppelten Stärke des Folienmaterials auf etwa 70 % bis 80 % verringert.

Unter Aluminiumfolien werden im Rahmen der vorliegenden Erdingung natürlich auch solche Folien verstanden, die aus Aluminiumlegierungen bestehen.

**Patentansprüche**

1. Kunststoff-Aluminium-Laminatfolientube deren äußerer Tubenmantel eine Dekoration bzw. Bedruckung (2) aufweist, die mit einer transparenten Kunststoffschicht (1) überzogen ist, dadurch gekennzeichnet, daß sich die Bedruckung über die gesamte Folienoberfläche bis in den durch Überlappung der Folienenden gebildeten Nahtbereich der Tube erstreckt.

2. Laminattube nach Anspruch 1, dadurch gekennzeichnet, daß die den Abschluß des äußeren Tubenmantels bildende Kunststoffschicht (1) einen Durchmesser von etwa 15 μm bis etwa 150 μm vorzugsweise maximal etwa 50 μm aufweist.

3. Laminattube nach Anspruch 1 und/oder 2, dadurch gekennzeichnet, daß die Laminatfolie zumindest im Bereich der Überlappung der Folienenden tubeninnenseitig mit einer weiteren transparenten Kunststoffschicht (5) überzogen ist.

**Claims**

1. Plastic-aluminum-laminate tube whose body is decorated and/or printed and coated by a transparent plastic layer, characterized in that the printing extends over the whole tube surface into the seamed area being formed by the overlapping foil ends.

2. Laminate tube according to claim 1, characterized in that the plastic layer forming the outside of the tube body has a diameter from approx. 15 μm to approx. 150 μm, preferably up to 50 μm.

3. Laminate tube according to claim 1 and/or 2, characterized in that the laminate foil inside the tube is coated with an additional transparent plastic layer at least in the area of the overlapping foil ends.

**Revendications**

1. Tube laminé en plastique-aluminium dont l'enveloppe extérieure montre une décoration et/ou une impression revêtue d'une couche transparente en plastique caractérisé par le fait que l'impression va de la totalité de la surface à la région de la couture du tube formée par le recouvrement des bouts des feuilles.

2. Tube laminé selon revendication 1 caractérisé par le fait que la couche plastique formant la bordure de l'enveloppe du tube a un diamètre d'environ 15 μm à environ 150 μm, de préférence maximal environ 50 μm.

3. Tube laminé selon revendication 1 et/ou 2 caractérisé par le fait que la feuille composite est revêtue — à l'intérieur du tube — d'une autre couche plastique transparente au moins dans la région du recouvrement des bouts des feuilles.

Figur